# EUROPEAN PATENT APPLICATION

(11) **EP 0 612 037 A1**
(43) Date of publication of application: **24.08.1994**
(21) Application number: 93203638.7
(22) Date of filing: 22.12.1993
(51) Int. Cl.: G06K 19/10, G07F 7/02, G07F 7/08, B42D 15/10

(54) **A reprogrammable electronic responder card with a visually readable information content**

(30) Priority: 22.12.1992 NL 9202226
(71) Applicant: N.V. Nederlandsche Apparatenfabriek NEDAP, NL-7141 DE Groenlo (NL)
(72) Inventor: Hogen Esch, Johannes Harms Lukas, NL-7122 ZN Aalten (NL)
(74) Representative: Smulders, Theodorus A.H.J., Ir.

(57) **Abstract**

A reprogrammable electronic responder card, comprising a support provided with an electronic circuit in which information can be stored and from which the stored information can be read out.

The support is, at least partly, provided with a thin film of liquid crystalline polymeric material which, by means of a temperature treatment, can be brought locally and selectively into a first condition wherein the material is clear or into a second condition wherein the material is opaque. Further, controllable means are provided, capable of effecting a local temperature change of the thin film, in order to visually represent at least a part of the information stored in the electronic circuit.

## Description

The invention relates to a reprogrammable electronic responder card, comprising a support provided with an electronic circuit in which information can be stored and from which the stored information can be read out.

An electronic responder card, sometimes referred to as chip card, comprises an integrated electronic circuit in which information can be stored which can be read out automatically, preferably in contactless manner, by means of a suitable device. In reprogrammable form, such a card is sometimes referred to as smart card. If so desired, the card may comprise a magnetic strip. Applications of such a chip card, which may or may not be contactless, include its use as an identification and/or admission card, for instance for use in public transport in buses, trams, the underground and trains, etc., as an admission card in skiing areas, as an admission card for soccer matches or in amusement parks, as a telephone card, etc.

Smart cards as described in the standard ISO 7816, or the contactless version thereof according to the standard ISO 10536, comprise an integrated electronic circuit and are reprogrammable. They are used as credit cards and also as debit cards. Because, relatively speaking, they have a rather long life and are little subject to wear, it is attractive, also in view of the price of such cards, to be able to use them again. Such reuse can for instance be effected by "revaluating" the card, but it is also possible to issue the card to different successive users within a particular environment of use. If the card is used as debit card, for instance as a telephone card, it is important for the user to be able to read the residual value of a card on the card itself with the naked eye, without having to go to a telephone booth for that purpose. The same applies to other applications, such as for instance the Dutch national 'strip' card for public transport.

It is also desirable to provide the possibility of "revaluating" the cards, so that they can be reused. In that case, too, the residual value of the card which can be read with the human eye must be provided again. In card systems where one and the same card can be issued to several users in the course of time, it is necessary that, in addition to the residual value, also information with regard to the validity and the identity of the user be provided in a form readable by the user. Accordingly, it must be possible to erase this information and to provide it again. Since the cost price of such a card can be written off over several years, a highly advantageous card system is obtained in comparison with other automatically readable card systems, such as for instance plastic magnetic cards or even paper magnetic cards. Also, by reuse the environment is burdened to a lesser extent.

A further requirement for a reusable card system is that it must be possible for the cards to be printed and issued rapidly at the sales outlets, so that the public can be served in quick succession. In some applications it may be desirable or necessary that, in addition to the identity, a passport photograph of the user be depicted on the card, in order to indicate the personal character.

The object of the present invention is to provide a solution to these problems.

According to the invention, a reprogrammable chip card of the above-described type is characterized in that the support is at least partly provided with a thin film of liquid crystalline polymeric material, which, by means of a temperature treatment, can be brought locally and selectively into a first condition wherein the material is clear or into a second condition wherein the material is opaque, and that further controllable means are provided, capable of effecting a local temperature change of the thin film, in order to visually represent at least a part of the information stored in the electronic circuit.

It is observed that liquid crystalline polymeric material which can be brought into different conditions through a heat treatment, for instance by means of a laser, is known per se from the article "Liquid crystal polymer optical memories: analogue, digital and holographic", written by Carolyn Bowry and Paul Bonnett and published in Optical Computing and Processing, 1991, vol. 1, no. 1, pp. 13-21.

Further, EP-A-0 344 789 discloses a memory card comprising a layer of liquid crystalline polymeric material, in which visually perceptible and readable information can be written, erased and written again. This known memory card, however, is not an electronic responder card and further does not comprise any means for effecting a local change in the condition of the optical memory material.

In the following the invention will be further described with reference to the accompanying drawings of two exemplary embodiments.
Fig. 1 diagrammatically shows a cross section of a part of an example of a responder card according to the invention;
Fig. 2 diagrammatically shows an example of a first embodiment of means for effecting a local temperature treatment of the memory material of the card; and
Fig. 3 diagrammatically shows, by way of example, a second embodiment of means for effecting a local temperature treatment of the memory material of the card.

In order that the responder cards, which may for instance have the dimensions of a bank pass, can be written on again in accordance with the invention, they are wholly or partly provided with a so-called optolaminate. This optolaminate consists of a thin film of liquid crystalline polymeric material which is provided in one or several thin layers and which, if so desired, may additionally be covered with a very thin protective layer of a transparent synthetic material of higher mechanical resistance.

The provision of the text or other information which can be read with the human eye is achieved by bringing the above-mentioned liquid crystalline polymer (LCP) material into different crystalline or amorphous phases.

In this process two temperatures are important, viz. the vitrification of glass temperature Tg, below which no phase change of the LCP material is possible, and the 'clearing' temperature Tc, above which the LCP material is isotropic and hence clear. Between Tg and Tc the material assumes the nematic crystalline phase, involving large diffusion of incident light.

The most suitable material for use in the present invention has a Tg of approximately 60 to 80 degrees centigrade and a Tc of approximately 110 to 130 degrees centrigrade. On the one hand, the information will then be retained even at relatively high ambient temperatures and, on the other, no damage of the supporting synthetic materials will occur even above the 'clearing' temperature Tc.

The writing of information can be effected by heating the material to above Tc at the locations where writing is to take place, using a laser or a thermal element, and subsequently cooling the material to below Tg so rapidly that the clear isotropic phase is, as it were, frozen in the material.

The erasure of information can be effected by maintaining the material at a temperature between Tg and Tc for some time, which brings about the nematic anisotropic phase, which provides for much diffusion of light in the material and which is also frozen in the material upon cooling to below Tg.

Examples of materials having the above-mentioned properties are polymers with cyclohexene and/or cyclopentene rings whose side chains contain synthetic organic dyes, such as for instance azomethine, squarylium, croconium and azo. To achieve a maximum possible contrast for the human eye, it is for instance possible to use as support of the thin LCP film a black base which absorbs all of the incident light at the transparent portions and to use as dye a material that reflects as much light as possible in the diffuse phase.

The above described manner of printing or writing with a laser or a thermal print head is possible with the aid of a suitable printer. Grey tints can be represented by varying the rate at which the range between Tg and Tc is traversed, which causes a greater or lesser extent of crystallization. In this manner photographs and the like can also be printed.

It is further possible to modify readable information on the card in contactless manner, for instance by drawing the required heat from one or more resistance elements, provided on the card under the LCP material, which can be controlled by an electronic chip present in the card. It would for instance be possible to use a 'bar' of a hundred elements to indicate in this manner the percentage of the value which has been used up or, conversely, the percentage of the residual value of the card. In that case, for the purpose of booking off, for instance one or more areas of the LCP material above this bar are made transparent. If the value of a card has been used up in this manner, for the purpose of revaluation the entire bar can be made diffuse again by maintaining the bar at a temperature between Tg and Tc for some time, which brings about the nematic crystalline phase.

Instead of a bar comprising, for instance, a hundred elements, a different predetermined pattern can be used as well. Thus, it is also possible to provide characters, which may for instance be formed with of seven or more segments or, for instance, with a dot pattern or a matrix of segments. In that case, however, writing will require somewhat more time because during writing some elements have to be erased, which requires that a temperature between Tg and Tc be maintained accurately. Of course, possibilities include the provision of symbols or pictograms.

Of course, the above-described finding can be used not only in cards of the size of a bank pass but also in cards or other supports comprising rewritable material of different dimensions. The card may further comprise a magnetic strip, such as described for instance in ISO standard no. 7812.

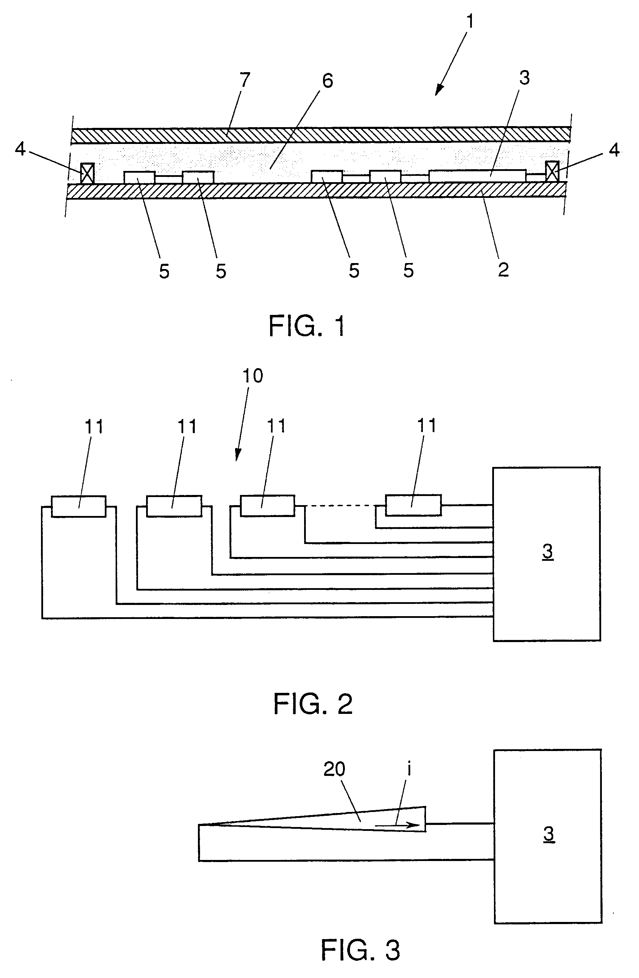

Fig. 1 diagrammatically shows a section of an example of a part of a responder card 1 according to the invention. The responder card comprises a support 2, on which is provided an integrated circuit 3, preferably in the form of a chip. If the card operates wholly or partly in contactless manner, a loop antenna, schematically indicated at 4, is connected with the chip to serve for energy and information transfer.

The chip is further connected with diagrammatically depicted means 5, which serve to heat the material of the optolaminate 6 locally and selectively.

The liquid crystalline polymeric material 6 can be provided on the support comprising the circuit 3 and the means 5, either directly or with an intervening intermediate layer (not shown) and may occupy a large or lesser portion of the surface thereof.

Preferably, a transparent protective layer 7 of a suitable material, for instance transparent synthetic material, is provided on the LCP material.

As already noted, a bar of resistance elements can be used to indicate the (residual) value of a card. In that case the bar of resistance elements cooperates with a strip of LCP material and each resistance element, upon being excited by the responder circuit, can subject a corresponding portion of the LCP material to a heat treatment so as to erase or write information at that location. Erasure can for instance be effected by locally heating the material to above the vitrification temperature Tg and keeping the material at that temperature for some time, so that it becomes opaque at that location. Writing can for instance be effected by locally heating the material to above the 'clearing' temperature Tc, so that the material becomes clear at that location, and by subsequently cooling the material at that location to below Tg so fast that the condition of clarity is maintained. By controlling the rate of cooling, for instance by means of the rate of reduction of the excitation of a resistance element, the extent of crystallization occurring during the cooling process can be controlled. In this manner it is for instance possible to depict grey tints.

Fig. 2 diagrammatically shows a top plan view of a chip 3 of a responder card according to the invention, and a bar 10 of resistance elements 11. By exciting more or fewer resistance elements so as to bring the section of the LCP material located above or below or next to them from, for instance, the clear into the opaque condition, for instance the residual value of the card can be indicated.

The embodiment shown in Fig. 2 includes a multiplicity of connections between the chip 3 and the resistance elements, which may consist of printed resistors, but, if so desired, also of concrete resistors.

Fig. 3 shows a different embodiment, in which a resistance bar is used which requires only two connections with the chip 3. The resistance bar 20 shown in Fig. 3 is of the printed resistor type and has a form gradually increasing in width and hence decreasing in resistance. In the example shown the resistance bar has a saw-tooth shape. By controlling the current i flowing through the resistance bar, it is possible, starting from the narrower end 21 in the direction of the wider end, to heat a shorter or longer portion of the resistance bar to above a specified temperature. At a relatively low current intensity, only the narrower portion of the resistance bar can attain a specified temperature, whilst upon increasing current intensity, wider portions having a smaller resistance can also become sufficiently hot to cause the condition of the associated LCP material to change.

By controlling the period of time during which a set current intensity is maintained and/or the rate at which an attained current intensity is reduced, the heating rate, optionally the maximum temperature and also cooling the rate of the LCP material at that location can be controlled.

## Claims

1. A reprogrammable electronic responder card, comprising a support provided with an electronic circuit in which information can be stored and from which the stored information can be read out,
characterized in that the support, at least partly, is provided with a thin film of liquid crystalline polymeric material which, by means of a temperature treatment, can be brought locally and selectively into a first condition wherein the material is clear or into a second condition wherein the material is opaque, and that further controllable means are provided, capable of effecting a local temperature change of the thin film in order to visually represent at least a part of the information stored in the electronic circuit.

2. A reprogrammable electronic responder card according to claim 1, characterized in that the controllable means comprise a plurality of resistance elements positioned according to a predetermined pattern.

3. A reprogrammable electronic responder card according to claim 1 or 2, characterized in that the controllable means comprise a bar of resistance elements.

4. A reprogrammable electronic responder card according to claim 1 or 2, characterized in that the controllable means comprise a strip of resistance material gradually widening from a narrow end, said strip having its narrower end and the end remote from the narrower end connected with the electronic circuit, the electronic circuit comprising means for controlling the intensity of the current flowing through the strip in operation.

5. A reprogrammable electronic responder card according to any one of the preceding claims, characterized in that the resistance elements comprise a plurality of fixed segments which, in varying combinations, form characters to represent numbers or text.

6. A reprogrammable electronic responder card according to any one of the preceding claims, characterized in that the controllable means are at least partly controllable by the electronic circuit.

7. A reprogrammable electronic responder card according to any one of the preceding claims, characterized in that the electronic circuit is adapted to control the rate of cooling after a local temperature increase of the thin film, such that the extent of crystallization of the polymeric material during cooling can be varied.

8. A reprogrammable electronic responder card according to any one of the preceding claims, characterized in that the responder card is designed as a card which can be at least partly read out and/or reprogrammed electronically in contactless manner.

9. A reprogrammable electronic responder card according to any one of the preceding claims, characterized in that this card comprises a magnetic strip according to standard ISO 7812.

10. A reprogrammble electronic responder card according to any one of the preceding claims, characterized in that this card comprises an electronic chip with contacts according to standard ISO 7816.

11. A reprogrammable electronic responder card according to any one of the preceding claims, characterized by a transparent cover film provided over the thin film.

12. A reprogrammable electronic responder card according to any one of the preceding claims, characterized by a base layer of a contrasting color, provided under the thin film.
